# EUROPEAN PATENT SPECIFICATION

(11) **EP 3 568 854 B1**
(45) Date of publication and mention of the grant of the patent: **30.12.2020**
(21) Application number: 18709815.7
(22) Date of filing: 10.01.2018
(51) Int. Cl.: G10L 21/02, G10L 21/0232, H04M 9/08

(54) **POST-MIXING ACOUSTIC ECHO CANCELLATION SYSTEMS AND METHODS**
AKUSTISCHE ECHOKOMPENSATIONSSYSTEME UND VERFAHREN NACH DEM MISCHEN
SYSTÈMES ET PROCÉDÉS D'ANNULATION D'ÉCHO ACOUSTIQUE POST-MÉLANGE

(30) Priority: 13.01.2017 US 201715406172
(43) Date of publication of application: 20.11.2019
(73) Proprietor: Shure Acquisition Holdings, Inc., Niles, IL 60714 (US)
(72) Inventor: WELLS-RUTHERFORD, Sean, Chicago IL 60626 (US); ABRAHAM, Mathew, T., Colorado Springs CO 80920 (US); GIBBS, John Casey, Chicago Illinois 60622 (US)
(74) Representative: Schollweck, Susanne
(86) International application number: PCT/US2018/013155
(87) International publication number: WO 2018/132465

(56) References cited:
- US-A1- 2008 253 553
- US-A1- 2010 074 433
- US-A1- 2013 297 302

## Description

### CROSS-REFERENCE TO RELATED APPLICATIONS

This application claims the benefit of U.S. Patent Application No. 15/406,172, filed on January 13, 2017

### TECHNICAL FIELD

This application generally relates to acoustic echo cancellation performed after the mixing of audio signals from a plurality of acoustic sources, such as microphones used in a conferencing system. In particular, this application relates to systems and methods for cancelling and suppressing acoustic echo from the output of a mixer while efficiently utilizing computation resources.

### BACKGROUND

Conferencing environments, such as boardrooms, conferencing settings, and the like, can involve the use of microphones for capturing sound from audio sources and loudspeakers for presenting audio from a remote location (also known as a far end). For example, persons in a conference room may be conducting a conference call with persons at a remote location. Typically, speech and sound from the conference room may be captured by microphones and transmitted to the remote location, while speech and sound from the remote location may be received and played on loudspeakers in the conference room. Multiple microphones may be used in order to optimally capture the speech and sound in the conference room.

However, the microphones may pick up the speech and sound from the remote location that is played on the loudspeakers. In this situation, the audio transmitted to the remote location may therefore include an echo, i.e., the speech and sound from the conference room as well as the speech and sound from the remote location. If there is no correction, the audio transmitted to the remote location may therefore be low quality or unacceptable because of this echo. In particular, it would not be desirable for persons at the remote location to hear their own speech and sound.

Existing echo cancellation systems may utilize an acoustic echo canceller for each of the multiple microphones, and a mixer can subsequently mix and process each echo-cancelled microphone signal. However, these types of systems may be computationally intensive and complex. For example, separate and dedicated processing may be needed to perform acoustic echo cancellation on each microphone signal. Furthermore, a typical acoustic echo canceller placed after a mixer would work poorly due to the need to constantly readapt to the mixed signal generated by the mixer should the mixer be dynamic, i.e., the gains on one or more of the mixer channels changes over time.

Accordingly, there is an opportunity for acoustic echo cancellation systems and methods that address these concerns. More particularly, there is an opportunity for acoustic echo cancellation systems and methods that cancel and suppress acoustic echo and work with a mixer that has mixed the audio of multiple acoustic sources, while being computationally efficient and resource-friendly.

US 2010/0074433 A1 refers to multichannel acoustic echo cancellation.

### SUMMARY

The object of the present invention is achieved by the independent claims. Particular embodiments are defined in the dependent claims.

The invention is intended to solve the above-noted problems by providing acoustic echo cancellation systems and methods that are designed to, among other things: (1) generate an echo-cancelled mixed audio signal based on a mixed audio signal from a mixer, information gathered from the audio signal from each of the plurality of acoustic sources, and a remote audio signal; (2) generate the echo-cancelled mixed audio signal by selecting various tap coefficients of a background filter performing a normalized least-mean squares algorithm, a hidden filter, and a mix filter, based on comparing a background error power and a hidden error power; and (3) use a non-linear processor to generate an echo-suppressed mixed audio signal from the echo-cancelled mixed audio signal when the background filter and hidden filter have not yet converged.

In an embodiment, a system includes a memory, a plurality of acoustic sources, a mixer in communication with the plurality of acoustic sources and the memory, and an acoustic echo canceller in communication with the mixer, the memory, and a remote audio signal. The plurality of acoustic sources may each be configured to generate an audio signal. The mixer may be configured to mix the audio signal from each of the plurality of acoustic sources to produce a mixed audio signal. The acoustic echo canceller may be configured to generate an echo-cancelled mixed audio signal based on the mixed audio signal, information gathered from each of the plurality of acoustic sources, and the remote audio signal.

In another embodiment, a method includes receiving an audio signal from each of a plurality of acoustic sources; receiving a remote audio signal; mixing the audio signal from each of the plurality of acoustic sources using a mixer to produce a mixed audio signal; and generating an echo-cancelled mixed audio signal based on the mixed audio signal, information gathered from the audio signal from each of the plurality of acoustic sources, and the remote audio signal, using an acoustic echo canceller.

These and other embodiments, and various permutations and aspects, will become apparent and be more fully understood from the following detailed description and accompanying drawings, which set forth illustrative embodiments that are indicative of the various ways in which the principles of the invention may be employed.

### BRIEF DESCRIPTION OF THE DRAWINGS

FIG. 1 is a schematic diagram of a communication system including an acoustic echo canceller, in accordance with some embodiments.
FIG. 2 is a schematic diagram of an acoustic echo canceller for use in the communication system of FIG. 1, in accordance with some embodiments.
FIG. 3 is a flowchart illustrating operations for performing acoustic echo cancellation using the communication system of FIG. 1, in accordance with some embodiments.
FIG. 4 is a flowchart illustrating operations for running a background filter and a hidden filter while performing acoustic echo cancellation using the communication system of FIG. 1, in accordance with some embodiments.
FIG. 5 is a flowchart illustrating operations for running a non-linear processor to generate an echo-suppressed mixed audio signal using the communication system of FIG. 1, in accordance with some embodiments.

### DETAILED DESCRIPTION

The description that follows describes, illustrates and exemplifies one or more particular embodiments of the invention in accordance with its principles. This description is not provided to limit the invention to the embodiments described herein, but rather to explain and teach the principles of the invention in such a way to enable one of ordinary skill in the art to understand these principles and, with that understanding, be able to apply them to practice not only the embodiments described herein, but also other embodiments that may come to mind in accordance with these principles. The scope of the invention is intended to cover all such embodiments that may fall within the scope of the appended claims, either literally or under the doctrine of equivalents.

It should be noted that in the description and drawings, like or substantially similar elements may be labeled with the same reference numerals. However, sometimes these elements may be labeled with differing numbers, such as, for example, in cases where such labeling facilitates a more clear description. Additionally, the drawings set forth herein are not necessarily drawn to scale, and in some instances proportions may have been exaggerated to more clearly depict certain features. Such labeling and drawing practices do not necessarily implicate an underlying substantive purpose. As stated above, the specification is intended to be taken as a whole and interpreted in accordance with the principles of the invention as taught herein and understood to one of ordinary skill in the art.

The acoustic echo cancellation systems and methods described herein can generate an echo-cancelled mixed audio signal based on a mixed audio signal from a mixer, information gathered from the audio signal from each of the plurality of acoustic sources, and a remote audio signal, while being computationally efficient and resource-friendly. The systems and methods may eliminate the need for separate acoustic echo cancellers for each acoustic source, e.g., microphone, while maintaining the cancellation benefits of separate acoustic echo cancellers. Moreover, the decreased computational load may allow the use of less expensive hardware (e.g., processor and/or DSP), and/or enable other features to be included in the communication system 100. User satisfaction may be increased through use of the communication system 100 and acoustic echo canceller 112.

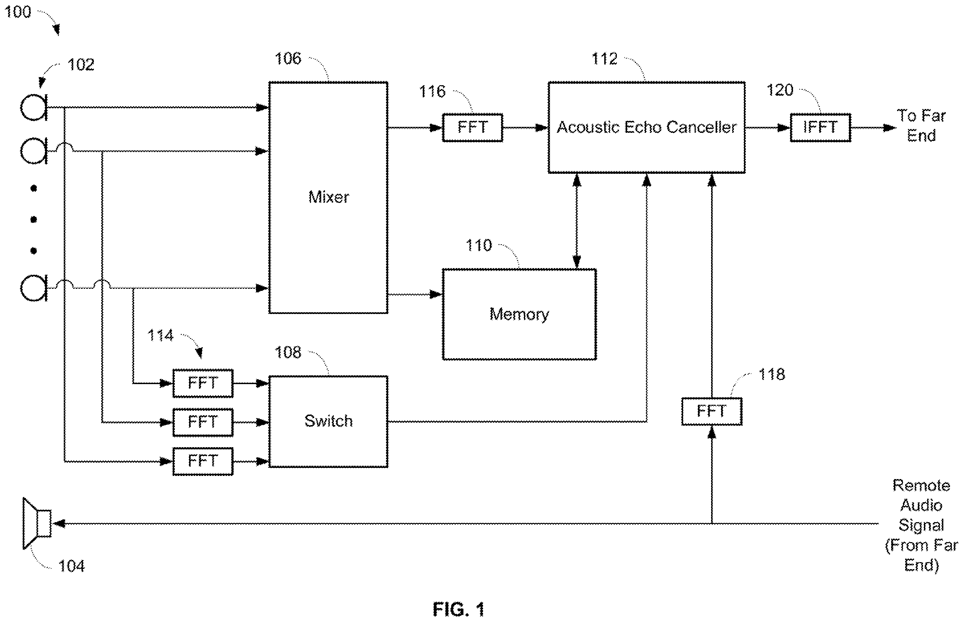

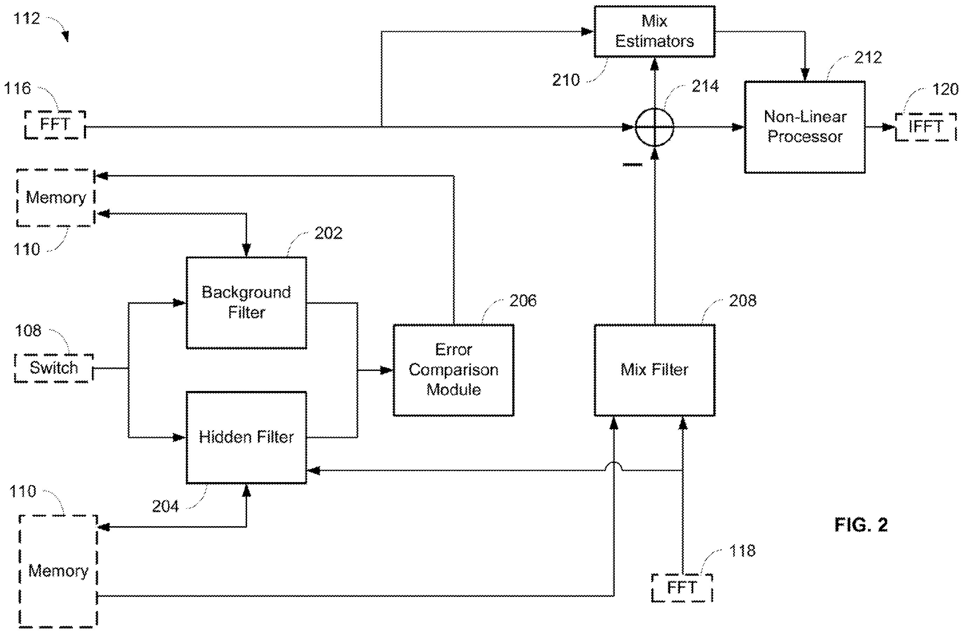

FIG. 1 is a schematic diagram of a communication system 100 for capturing sound from audio sources in an environment using microphones 102 and presenting audio from a remote location using a loudspeaker 104. FIG. 2 is a schematic diagram of the acoustic echo canceller 112 included in the communication system 100. The communication system 100 may generate an echo-cancelled mixed audio signal using the acoustic echo canceller 112 that processes a mixed audio signal from a mixer 106. The echo-cancelled mixed audio signal may mitigate the sound received from the remote location that is played on the loudspeaker 104. In this way, the echo-cancelled mixed audio signal may be transmitted to the remote location without the undesirable echo of persons at the remote location hearing their own speech and sound.

Environments such as conference rooms may utilize the communication system 100 to facilitate communication with persons at the remote location, for example. The types of microphones 102 and their placement in a particular environment may depend on the locations of audio sources, physical space requirements, aesthetics, room layout, and/or other considerations. For example, in some environments, the microphones may be placed on a table or lectern near the audio sources. In other environments, the microphones may be mounted overhead to capture the sound from the entire room, for example. The communication system 100 may work in conjunction with any type and any number of microphones 102. Various components included in the communication system 100 may be implemented using software executable by one or more servers or computers, such as a computing device with a processor and memory, and/or by hardware (e.g., discrete logic circuits, application specific integrated circuits (ASIC), programmable gate arrays (PGA), field programmable gate arrays (FPGA), etc.

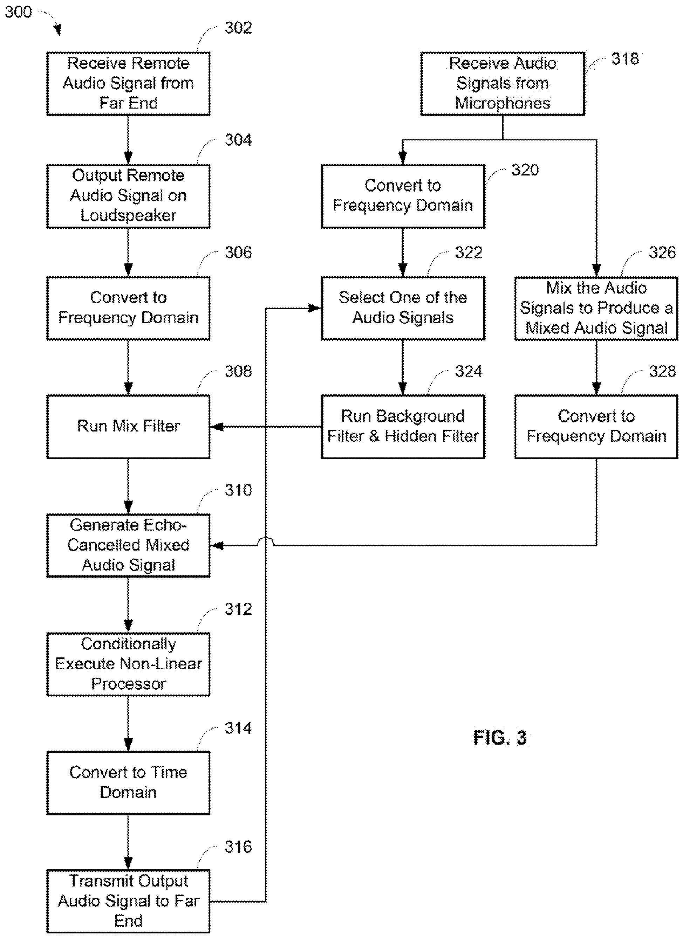

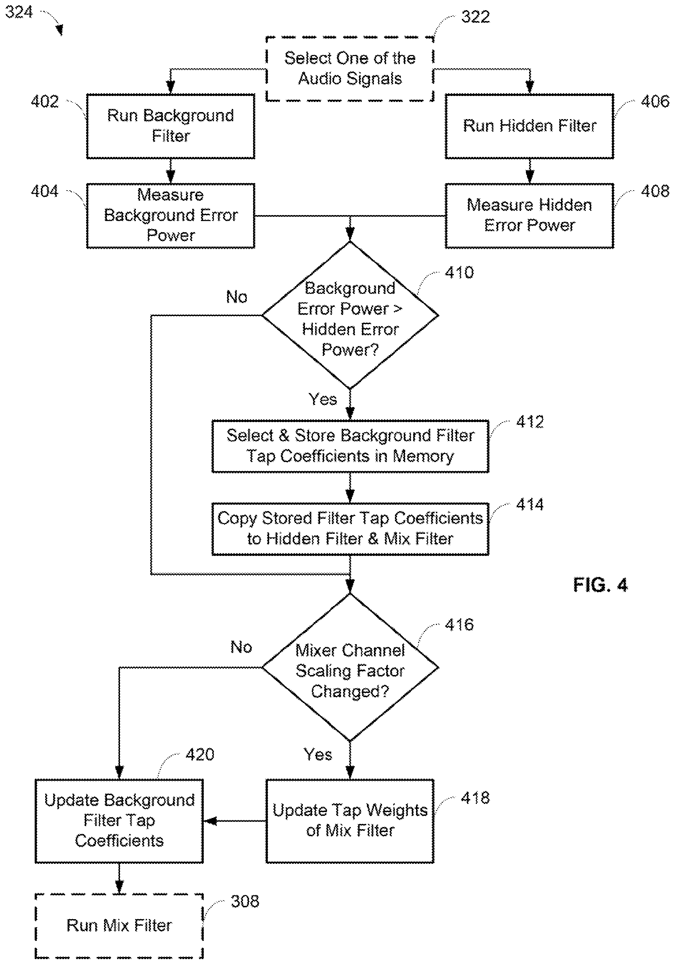

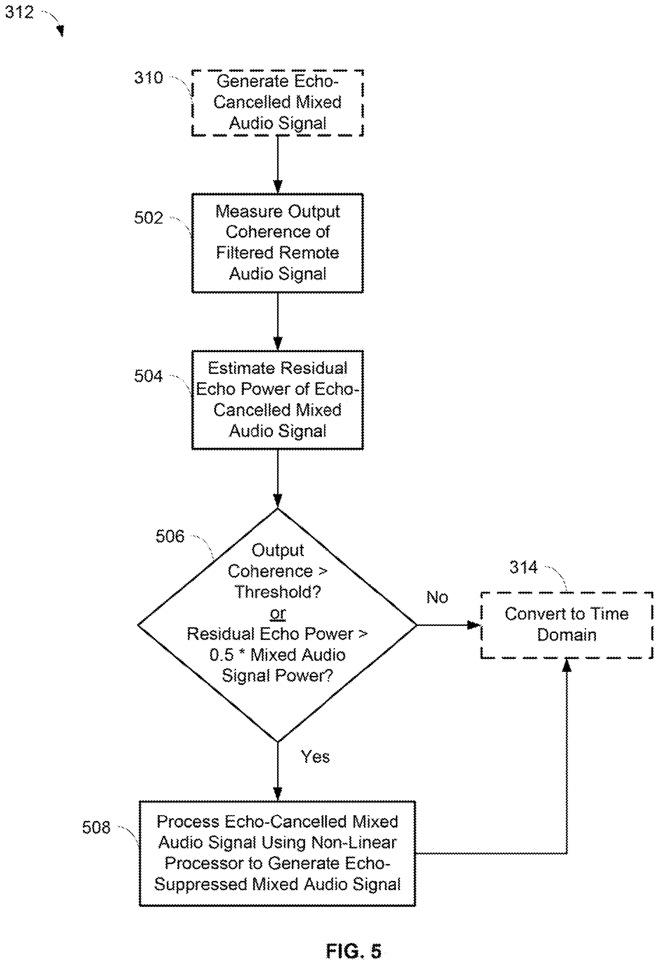

FIGs. 3-5 illustrate embodiments of methods for utilizing the communication system 100 and the acoustic echo canceller 112. In particular, FIG. 3 illustrates a process 300 for performing acoustic echo cancellation using the communication system 100, FIG. 4 illustrates a method 324 for running a background filter 202 and a hidden filter 204 in the acoustic echo canceller 112, and FIG. 5 illustrates a method 312 for conditionally running a non-linear processor 212 in the acoustic echo canceller 112. In general, a computer program product in accordance with the embodiments includes a computer usable storage medium (e.g., standard random access memory (RAM), an optical disc, a universal serial bus (USB) drive, or the like) having computer-readable program code embodied therein, wherein the computer-readable program code is adapted to be executed by a processor (e.g., working in connection with an operating system) to implement the methods described below. In this regard, the program code may be implemented in any desired language, and may be implemented as machine code, assembly code, byte code, interpretable source code or the like (e.g., via C, C++, Java, Actionscript, Objective-C, Javascript, CSS, XML, and/or others).

Referring to FIG. 1, the communication system 100 may include the microphones 102, the loudspeaker 104, a mixer 106, a switch 108, a memory 110, the acoustic echo canceller 112, fast Fourier transform (FFT) modules 114, 116, 118, and an inverse fast Fourier transform module 120. Each of the microphones 102 may detect sound in the environment and convert the sound to an audio signal. In embodiments, some or all of the audio signals from the microphones 102 may be processed by a beamformer (not shown) to generate one or more beamformed audio signals, as is known in the art. Accordingly, while the systems and methods are described herein as using audio signals from microphones 102, it is contemplated that the systems and methods may also utilize any type of acoustic source, such as beamformed audio signals generated by a beamformer.

The audio signals from each of the microphones 102 may be received by the mixer 106, such as at step 318 of the process 300 shown in FIG. 3, to generate a mixed audio signal, such as at step 326. The mixed audio signal generated by the mixer 106 may conform to a desired audio mix such that the audio signals from certain microphones are emphasized and the audio signals from other microphones are deemphasized or suppressed. Exemplary embodiments of audio mixers are disclosed in commonly-assigned patents, U.S. Pat. No. 4,658,425 and U.S. Pat. No. 5,297,210. The mixed audio signal generated at step 326 may be converted into the frequency domain using a fast Fourier transform module 116, such as at step 328.

In parallel, the audio signals from each of the microphones 102 may be converted to the frequency domain by fast Fourier transform modules 114, such as at step 320. One of these converted audio signals may be selected and conveyed at step 322 by a signal selection mechanism, such as a switch 108, for example. The signal selection mechanism may gather information about each acoustic source (or subset of acoustic sources), e.g., audio signals from the microphones 102 or beamformed audio signals, in order to optimize the adaptation for a mix of all of the acoustic sources. While a switch 108 is illustrated in FIG. 1, other signal selection mechanisms are contemplated, such as a second mixer that could select the audio signal from a particular microphone 102 by attenuating some or all of the audio signals from the other microphones 102.

Each of the audio signals from the microphones 102 can be selected by the switch 108 and processed in turn, such that a background filter 202 and a hidden filter 204 (in the acoustic echo canceller 112) work on one of the audio signals at a time. The switch 108 may enable adaptation on each of the audio signals from the microphones 102 within a particular duration so that the communication system 100 may properly perform echo cancellation regardless of the type of mixer 106, the current state of the mixer 106, or if the mixer 106 is undergoing a change in state. At step 324, the background filter 202 and the hidden filter 204 in the acoustic echo canceller 112 may run on the selected audio signal. Step 324 is described below in more detail with respect to FIG. 4.

FIG. 4 describes further details of an embodiment of step 324 for running a background filter 202 and a hidden filter 204 in the acoustic echo canceller 112. The background filter 202 may be a finite impulse response filter that runs a normalized least-mean squares algorithm on the selected audio signal, such as at step 402, and may generate an estimate ***ĥ****ₘ*[*n*] of the impulse response of a sample *n* for a microphone *m* in the environment. The background filter 202 may also measure a background error power of the selected audio signal, such as at step 404. The background filter 202 may have tap coefficients **h** that are used to scale a finite series of delay taps. A background error *e[n]* of the selected audio signal may be measured by the background filter 202 according to the equation: $e \left[n\right] = d \left[n\right] - {\hat{h}}^{†} \left[n\right] x \left[n\right]$ where d[n] is the audio signal, x[n] is a vector of samples from a remote audio signal, and ^{†} denotes a conjugate transpose operation. The background error power may be measured based on the background error *e[n],* such as by using a time average of the magnitude of the squared background error.

The hidden filter 204 may be a finite impulse response filter that is run at step 406, on a remote audio signal and a previous unweighted estimate of the echo-path impulse response made by the background filter 202. The unweighted previous estimate corresponds to an unweighted portion of the selected audio signal within a mix filter 208 (described below). The hidden filter 204 may measure a hidden error of the selected audio signal, such as at step 408, by subtracting the remote audio signal from the selected audio signal. A hidden error power may be measured based on the hidden error, such as by using a time average of the magnitude of the squared hidden error. The hidden filter 204 may have tap coefficients **h** that are used to scale a finite series of delay taps.

The background error power measured at step 404 and the hidden error power measured at step 408 may be compared at step 410 by an error comparison module 206. The error comparison module 206 may determine at step 410 whether the background error power is greater than the hidden error power. If it is determined that the background error power is greater than the hidden error power at step 410, then the process 324 may continue to step 412. At step 412, the tap coefficients of the background filter 202 may be selected and stored in a memory 110. At step 414, the stored tap coefficients from step 412 may be copied from the memory 110 and used to replace the tap coefficients of the hidden filter 204. The stored tap coefficients from step 412 may also be copied at step 414 from the memory 110 and used to update the tap coefficients of the mix filter 208, as described in more detail below.

Following step 414, the process 324 may continue to step 416. In addition, if it is determined at step 410 that the background error power is not greater than the hidden error power, then the process 324 may continue to step 416. At step 416, it may be determined whether a channel scaling factor *α* of the mixer 106 has changed. The channel scaling factor of the mixer 106 may change automatically or manually (e.g., by a user adjustment). If the channel scaling factor of the mixer 106 has changed at step 416, then the process 324 may continue to step 418. At step 418, the tap weights of the mix filter 208 may be updated corresponding to the changed channel scaling factor, such as by adding a difference in weight multiplied by a channel impulse response estimate, as described in more detail below.

Following step 418, the process 324 may continue to step 420. In addition, if it is determined that the channel scaling of the mixer 106 has not changed at step 416, then the process 324 may continue to step 420. At step 420, the tap coefficients of the background filter 202 may be updated, according to the equation: $\hat{h} \left[n+1\right] = \hat{h} \left[n\right] + \frac{α}{{‖ x \left[n\right] ‖}^{2}} {e}^{∗} \left[n\right] x \left[n\right]$ where *α* is a step-size parameter, * denotes a complex conjugation operation, and ∥.∥ denotes a ℓ² norm. The process 324 may then return to the process 300 and in particular, to step 308, as described below.

Returning to the process 300 of FIG. 3, while the audio signals are received from the microphones 102 and processed in steps 318-328 of the process 300 and steps 402-420 of the process 324, a remote audio signal may be received from a remote location, i.e., a far end, such as step 302. The remote audio signal may be output on the loudspeaker 104 in the environment, such as at step 304. At step 306, the remote audio signal may also be converted into the frequency domain using a fast Fourier transform module 118. At this point, it can be seen that the acoustic echo canceller 112 may receive the mixed audio signal from the mixer 106, the selected audio signal from the switch 108, and the remote audio signal from the remote location (far end). Each of the mixed audio signal from the mixer 106, the selected audio signal from the switch 108, and the remote audio signal may have been converted into the frequency domain, as previously described, by the respective FFT modules 114, 116, 118. Accordingly, the acoustic echo canceller 112 may operate in the frequency domain so that the acoustic echo cancellation is performed faster and with high quality.

The acoustic echo canceller 112 may run a mix filter 208 at step 308. The mix filter 208 may be a weighted sum ***ĥ****ₘᵢₓ*[*n*] of the finite impulse responses of all the audio signals of the microphones 102, such that: ${\hat{h}}_{mix} \left[n\right] = {\sum }_{m = 0}^{M - 1} {a}_{m} {\hat{h}}_{m} \left[n\right]$ where *aₘ* is the channel scaling (weight or gain) of a particular microphone 102. The mix filter 208 processes the remote audio signal received from the far end and generates a filtered remote audio signal that is an estimate of the echo signal generated at the output of the mixer. In particular, the mix filter models the coupling between the echo paths detected by the microphones 102 and the mixer 106.

As described previously, the tap coefficients of the mix filter 208 may be updated by the tap coefficients of the background filter at step 414 of the process 324, if the background error power is greater than the hidden error power at step 410. When this occurs, the weighted sum ***ĥ****ₘᵢₓ*[*n* + 1] for the next sample *n*+*1* may be given by: ${\hat{h}}_{mix} \left[n+1\right] = {\sum }_{m \neq m ′}^{M - 1} {a}_{m} {\hat{h}}_{m} \left[n\right] + {a}_{m ′} {\hat{h}}_{m ′} \left[n+1\right]$ where m' is the selected audio signal of a particular microphone 102.

As also described previously, the tap weights of the mix filter 208 may be updated at step 418 of the process 324, if the channel scaling factor of the mixer 106 has changed at step 416. When this occurs, the update may be performed by adding the difference in weight multiplied by the channel impulse response estimate ***ĥ****_{m'}*. In particular, the weighted sum ***ĥ****ₘᵢₓ*[*n* + 1] for the next sample *n*+*1* may be given by: ${\hat{h}}_{mix} \left[n+1\right] = {\sum }_{m \neq m ′}^{M - 1} {a}_{m} {\hat{h}}_{m} \left[n\right] + \left({a}_{m ′}\left[n+1\right]-{a}_{m ′}\left[n\right]\right) {\hat{h}}_{m ′} \left[n\right]$

After the mix filter 208 generates the filtered remote audio signal at step 308, the process 300 may continue to step 310. At step 310, the echo-cancelled mixed audio signal may be generated by the acoustic echo canceller 112. In particular, the filtered remote audio signal generated by the mix filter 208 may be subtracted from the mixed audio signal from the mixer 106, as denoted by the summing point 214 shown in FIG. 2. The echo-cancelled mixed audio signal may be processed by a non-linear processor at step 312, depending on the coherence of the filtered remote audio signal from the mix filter 208 and the estimated residual echo power of the echo-cancelled mixed audio signal output from the summing point 214. Details of step 312 are described below with respect to FIG. 5.

FIG. 5 describes further details of an embodiment of step 312 for running a non-linear processor 212 in the acoustic echo canceller 112 to generate an echo-suppressed mixed audio signal. In particular, after the echo-cancelled mixed audio signal is generated at step 310, it can be determined whether to run the non-linear processor 212 to further suppress any echo and generate comfort noise (e.g., synthetic background noise), as necessary. The non-linear processor 212 may run, for example, in situations when there is only speech and sound from the remote location (far end) and when the background filter 202 and the hidden filter 204 have not yet converged.

At step 502, the output coherence of the filtered remote audio signal from the mix filter 208 may be measured by mix estimators 210. The output coherence is a measure of the relationship between the frequency content of the filtered remote audio signal and the audio signals from the microphones 102. The mix estimators 210 may measure the coherence from the output of the mixer 106 prior to echo cancellation at the summing point 214 and after echo cancellation at the summing point 214. If the coherence is high, then the signals may be deemed to be related in the frequency domain. The residual echo power of the echo-cancelled mixed audio signal output from the summing point 214 may be estimated at step 504 by the mix estimators 210. The non-linear processor 212 may process the echo-cancelled mixed audio signal at step 508 to generate an echo-suppressed mixed audio signal if (1) the output coherence is greater than a predetermined threshold (e.g., signifying that there is only an echo signal present in the microphones 102); or (2) the residual echo power is greater than half of the power of the mixed audio signal from the mixer 106. Following step 508, the process 312 may continue to step 314 of the process 300. However, if neither of these conditions is satisfied, then the process 312 may continue from step 506 to step 314 of the process 300.

Returning to FIG. 3, at step 314, the (1) echo-cancelled mixed audio signal generated at step 310 (if the non-linear processor 212 was not executed at step 312) or (2) the echo-suppressed mixed audio signal generated at step 508 (if the non-linear processor 212 was executed at step 312) may be converted to the time domain. The resulting echo-cancelled or echo-suppressed audio signal may be transmitted to the remote location (far end) at step 316. The process 300 may return to step 322 to select and convey another of the audio signals from the microphones 102 for processing at steps 324 and 308-316, as described previously. In this way, information from the audio signal from each of the plurality of microphones 102 may be utilized when generating the echo-cancelled or echo-suppressed audio signal.

Any process descriptions or blocks in figures should be understood as representing modules, segments, or portions of code which include one or more executable instructions for implementing specific logical functions or steps in the process, and alternate implementations are included within the scope of the embodiments of the invention in which functions may be executed out of order from that shown or discussed, including substantially concurrently or in reverse order, depending on the functionality involved, as would be understood by those having ordinary skill in the art.

This disclosure is intended to explain how to fashion and use various embodiments in accordance with the technology rather than to limit the true, intended, scope thereof. The foregoing description is not intended to be exhaustive or to be limited to the precise forms disclosed. Modifications or variations are possible in light of the above teachings. The embodiment(s) were chosen and described to provide the best illustration of the principle of the described technology and its practical application, and to enable one of ordinary skill in the art to utilize the technology in various embodiments and with various modifications as are suited to the particular use contemplated. The scope of the present invention is defined by the appended claims.

## Claims

1. A system, comprising:
(A) a memory;
(B) a plurality of acoustic sources each configured to generate an audio signal;
(C) a mixer in communication with the plurality of acoustic sources and the memory, the mixer configured to mix the audio signal from each of the plurality of acoustic sources to produce a mixed audio signal; and
(D) an acoustic echo canceller in communication with the mixer, the memory, and a remote audio signal, the acoustic echo canceller configured to generate an echo-cancelled mixed audio signal based on the mixed audio signal, information gathered from the audio signal from each of the plurality of acoustic sources, and the remote audio signal.

2. The system of claim 1:
further comprising a signal selection mechanism in communication with the plurality of acoustic sources and the acoustic echo canceller, the signal selection mechanism configured to select at least one audio signal from at least one of the plurality of acoustic sources and convey the at least one selected audio signal to the acoustic echo canceller;
wherein the acoustic echo canceller is further configured to generate the echo-cancelled mixed audio signal based on the mixed audio signal, information gathered from the at least one selected audio signal, and the remote audio signal.

3. The system of claim 1, wherein the acoustic echo canceller comprises:
a background filter having background filter tap coefficients and configured to measure a background error power of the audio signal from each of the plurality of acoustic sources using a normalized least-mean squares algorithm;
a hidden filter having hidden filter tap coefficients and configured to measure a hidden error power of the audio signal from each of the plurality of acoustic sources, based on the audio signal from each of the plurality of acoustic sources and the remote audio signal; and
an error comparison module in communication with the background filter and the hidden filter, the error comparison module configured to:
compare the background error power and the hidden error power; and
select and store the background filter tap coefficients in the memory, if the background error power is greater than the hidden error power.

4. The system of claim 3, wherein the error comparison module is further configured to copy the stored background filter tap coefficients from the memory to replace the hidden filter tap coefficients, if the background error power is greater than the hidden error power.

5. The system of claim 3, wherein the background filter is configured to measure a background error e[n] according to the equation: $e \left[n\right] = d \left[n\right] - {\hat{h}}^{†} \left[n\right] x \left[n\right]$ where d[n] is one of the audio signals, x[n] is a vector of samples from the remote audio signal, ***ĥ***[n] is an estimate of the impulse response of a sample n, and ^{†} denotes a conjugate transpose operation;
wherein the background error power is estimated based on the background error.

6. The system of claim 3, wherein the error comparison module is further configured to update the background filter tap coefficients according to the equation: $\hat{h} \left[n+1\right] = \hat{h} \left[n\right] + \frac{α}{{‖ x \left[n\right] ‖}^{2}} {e}^{∗} \left[n\right] x \left[n\right]$ where *α* is a step-size parameter, * denotes a complex conjugation operation, and ∥·∥ denotes a ℓ² norm.

7. The system of claim 1, wherein the acoustic echo canceller further comprises:
a mix filter having mix filter tap coefficients and tap weights, and configured to filter the remote audio signal to generate a filtered remote audio signal.

8. The system of claim 3, wherein:
the acoustic echo canceller further comprises a mix filter having mix filter tap coefficients and tap weights, and configured to filter the remote audio signal to generate a filtered remote audio signal; and
the error comparison module is further configured to copy the stored background filter tap coefficients from the memory to update the mix filter tap coefficients by combining the hidden filter tap coefficients of each of the plurality of acoustic sources not currently under adaptation and the most recently updated background filter tap coefficients corresponding to the acoustic source currently under adaptation, if the background error power is greater than the hidden error power.

9. The system of claim 3, wherein:
the acoustic echo canceller further comprises a mix filter having mix filter tap coefficients and tap weights, and configured to filter the remote audio signal to generate a filtered remote audio signal; and
the mix filter is further configured to be updated if a channel scaling factor of the mixer has changed by updating the tap weights corresponding to the changed channel scaling factor by adding the difference in weight multiplied by a channel impulse response estimate.

10. The system of claim 7, wherein the acoustic echo canceller is configured to generate the echo-cancelled mixed audio signal by subtracting the filtered remote audio signal from the mixed audio signal.

11. The system of claim 10, wherein the acoustic echo canceller further comprises:
a mix estimator in communication with the mixer, the mix filter, and the echo-cancelled mixed audio signal, the mix estimator configured to:
measure an output coherence of the filtered remote audio signal; and
estimate a residual echo power of the echo-cancelled mixed audio signal; and
a non-linear processor configured to process the echo-cancelled mixed audio signal to generate an echo-suppressed mixed audio signal, if the output coherence exceeds a predetermined threshold or if the residual echo power exceeds half of an power of the mixed audio signal.

12. A method, comprising:
receiving an audio signal from each of a plurality of acoustic sources;
receiving a remote audio signal;
mixing the audio signal from each of the plurality of acoustic sources using a mixer to produce a mixed audio signal; and
generating an echo-cancelled mixed audio signal based on the mixed audio signal, information gathered from the audio signal from each of the plurality of acoustic sources, and the remote audio signal, using an acoustic echo canceller.

13. The method of claim 12:
further comprising selecting and conveying at least one selected audio signal from at least one of the plurality of acoustic sources using a signal selection mechanism to the acoustic echo canceller;
wherein generating the echo-cancelled mixed audio signal comprises generating the echo-cancelled mixed audio signal based on the mixed audio signal, information gathered from the at least one selected audio signal, and the remote audio signal.

14. The method of claim 12, wherein generating the echo-cancelled mixed audio signal comprises:
measuring a background error power of the audio signal from each of the plurality of acoustic sources using a normalized least-mean squares algorithm in a background filter having background filter tap coefficients;
measuring a hidden error power of the audio signal from each of the plurality of acoustic sources, based on the audio signal from each of the plurality of acoustic sources and the remote audio signal, using a hidden filter having hidden filter tap coefficients;
comparing the background error power and the hidden error power; and
selecting and storing the background filter tap coefficients in a memory, if the background error power is greater than the hidden error power.

15. The method of claim 14, further comprising copying the stored background filter tap coefficients from the memory to replace the hidden filter tap coefficients, if the background error power is greater than the hidden error power.

16. The method of claim 14, wherein:
measuring the background error power comprises measuring a background error e[n] according to the equation: $e \left[n\right] = d \left[n\right] - {\hat{h}}^{†} \left[n\right] x \left[n\right]$ where d[n] is one of the audio signals, x[n] is a vector of samples from the remote audio signal, ***ĥ***[n] is an estimate of the impulse response of a sample n, and ^{†} denotes a conjugate transpose operation; and
estimating the background error power based on the background error.

17. The method of claim 14, further comprising updating the background filter tap coefficients according to the equation: $\hat{h} \left[n+1\right] = \hat{h} \left[n\right] + \frac{α}{{‖ x \left[n\right] ‖}^{2}} {e}^{∗} \left[n\right] x \left[n\right]$ where *α* is a step-size parameter, * denotes a complex conjugation operation, and ∥·∥ denotes a ℓ² norm.

18. The method of claim 12, further comprising filtering the remote audio signal to generate a filtered remote audio signal using a mix filter having mix filter tap coefficients and tap weights.

19. The method of claim 14, further comprising:
filtering the remote audio signal to generate a filtered remote audio signal using a mix filter having mix filter tap coefficients and tap weights; and
copying the stored background filter tap coefficients from the memory to update the mix filter tap coefficients by combining the hidden filter tap coefficients of each of the plurality of acoustic sources not currently under adaptation and the most recently updated background filter tap coefficients corresponding to the acoustic source currently under adaptation, if the background error power is greater than the hidden error power.

20. The method of claim 14, further comprising:
filtering the remote audio signal to generate a filtered remote audio signal using a mix filter having mix filter tap coefficients and tap weights; and
if a channel scaling factor of the mixer has changed, updating the mix filter by updating the tap weights corresponding to the changed channel scaling factor by adding the difference in weight multiplied by a channel impulse response estimate.

21. The method of claim 18, wherein generating the echo-cancelled mixed audio signal comprises subtracting the filtered remote audio signal from the mixed audio signal.

22. The method of claim 21, further comprising:
measuring an output coherence of the filtered remote audio signal using a mix estimator;
estimating a residual echo power of the echo-cancelled mixed audio signal, using the mix estimator; and
processing the echo-cancelled mixed audio signal to generate an echo-suppressed mixed audio signal using a non-linear processor, if the output coherence exceeds a predetermined threshold or if the residual echo power exceeds half of an power of the mixed audio signal.

## Patentansprüche

1. System, das umfasst:
(A) einen Speicher;
(B) eine Vielzahl von akustischen Quellen, wobei jede konfiguriert ist, ein Audiosignal zu erzeugen;
(C) einen Mischer in Kommunikation mit der Vielzahl von akustischen Quellen und dem Speicher, wobei der Mischer konfiguriert ist, das Audiosignal von jeder der Vielzahl von akustischen Quellen zu mischen, um ein gemischtes Audiosignal zu erzeugen; und
(D) einen akustischen Echokompensator in Kommunikation mit dem Mischer, dem Speicher und einem Fern-Audiosignal, wobei der akustische Echokompensator konfiguriert ist, ein Echo-kompensiertes gemischtes Audiosignal zu erzeugen, basierend auf dem gemischten Audiosignal, Informationen, die von dem Audiosignal von jeder der Vielzahl von akustischen Quellen gesammelt wurden, und dem Fern-Audiosignal.

2. System nach Anspruch 1:
das ferner einen Signalauswahlmechanismus umfasst, in Kommunikation mit der Vielzahl von akustischen Quellen und dem akustischen Echokompensator, wobei der Signalauswahlmechanismus konfiguriert ist, mindestens ein Audiosignal von mindestens einer der Vielzahl von akustischen Quellen auszuwählen und das mindestens eine ausgewählte Audiosignal an den akustischen Echokompensator zu übermitteln;
wobei der akustische Echokompensator ferner konfiguriert ist, das Echo-kompensierte gemischte Audiosignal zu erzeugen, basierend auf dem gemischten Audiosignal, Informationen, die von dem mindestens einen ausgewählten Audiosignal gesammelt wurden, und dem Fern-Audiosignal.

3. System nach Anspruch 1, wobei der akustische Echokompensator umfasst:
ein Hintergrundfilter, das Hintergrundfilter-Abgriffkoeffizienten aufweist und konfiguriert ist, eine Hintergrundfehlerleistung des Audiosignals von jeder der Vielzahl von akustischen Quellen zu messen, unter Verwenden eines normalisierte-kleinste-mittlere-Quadrate-Algorithmus;
ein verborgenes Filter, das Verborgenes-Filter-Abgriffkoeffizienten aufweist und konfiguriert ist, eine verborgene Fehlerleistung des Audiosignals von jeder der Vielzahl von akustischen Quellen zu messen, basierend auf dem Audiosignal von jeder der Vielzahl von akustischen Quellen und dem Fern-Audiosignal; und
ein Fehlervergleichsmodul in Kommunikation mit dem Hintergrundfilter und dem verborgenen Filter, wobei das Fehlervergleichsmodul konfiguriert ist, um:
die Hintergrundfehlerleistung und die verborgene Fehlerleistung zu vergleichen; und
die Hintergrundfilter-Abgriffkoeffizienten auszuwählen und in dem Speicher zu speichern, wenn die Hintergrundfehlerleistung größer als die verborgene Fehlerleistung ist.

4. System nach Anspruch 3, wobei das Fehlervergleichsmodul ferner konfiguriert ist, die gespeicherten Hintergrundfilter-Abgriffkoeffizienten aus dem Speicher zu kopieren, um die Verborgenes-Filter-Abgriffkoeffizienten zu ersetzen, wenn die Hintergrundfehlerleistung größer als die verborgene Fehlerleistung ist.

5. System nach Anspruch 3, wobei das Hintergrundfilter konfiguriert ist, einen Hintergrundfehler e[n] zu messen, gemäß der Gleichung: $e \left[n\right] = d \left[n\right] - {\hat{h}}^{†} \left[n\right] x \left[n\right]$ wobei d[n] eines der Audiosignale ist, x[n] ein Vektor von Abtastungen von dem Fern-Audiosignal ist, ***ĥ***[n] eine Schätzung der Impulsantwort von einer Abtastung n ist, und ^{†} eine Konjugier-Transponier-Operation bezeichnet;
wobei die Hintergrundfehlerleistung basierend auf dem Hintergrundfehler geschätzt wird.

6. System nach Anspruch 3, wobei das Fehlervergleichsmodul ferner konfiguriert ist, die Hintergrundfilter-Abgriffkoeffizienten zu aktualisieren, gemäß der Gleichung: $\hat{h} \left[n+1\right] = \hat{h} \left[n\right] + \frac{α}{{‖ x \left[n\right] ‖}^{2}} {e}^{∗} \left[n\right] x \left[n\right]$ wobei *α* ein Schrittgrößenparameter ist, * eine Komplex-Konjugations-Operation bezeichnet, und ∥·∥ eine ℓ²-Norm bezeichnet.

7. System nach Anspruch 1, wobei der akustische Echokompensator ferner umfasst:
ein Mischfilter, das Mischfilter-Abgriffkoeffizienten und -Abgriffgewichtungen aufweist, und konfiguriert ist, das Fern-Audiosignal zu filtern, um ein gefiltertes Fern-Audiosignal zu erzeugen.

8. System nach Anspruch 3, wobei:
der akustische Echokompensator ferner ein Mischfilter umfasst, das Mischfilter-Abgriffkoeffizienten und -Abgriffgewichtungen aufweist, und konfiguriert ist, das Fern-Audiosignal zu filtern, um ein gefiltertes Fern-Audiosignal zu erzeugen; und
das Fehlervergleichsmodul ferner konfiguriert ist, die gespeicherten Hintergrundfilter-Abgriffkoeffizienten aus dem Speicher zu kopieren, um die Mischfilter-Abgriffkoeffizienten zu aktualisieren, durch Kombinieren der Verborgenes-Filter-Abgriffkoeffizienten von jeder der Vielzahl von akustischen Quellen, die gerade nicht unter Anpassung sind, und der zuletzt aktualisierten Hintergrundfilter-Abgriffkoeffizienten, entsprechend der akustischen Quelle, die gerade unter Anpassung ist, wenn die Hintergrundfehlerleistung größer als die verborgene Fehlerleistung ist.

9. System nach Anspruch 3, wobei:
der akustische Echokompensator ferner ein Mischfilter umfasst, das Mischfilter-Abgriffkoeffizienten und -Abgriffgewichtungen aufweist, und konfiguriert ist, das Fern-Audiosignal zu filtern, um ein gefiltertes Fern-Audiosignal zu erzeugen; und
das Mischfilter ferner konfiguriert ist, aktualisiert zu werden, wenn sich ein Kanalskalierungsfaktor des Mischers geändert hat, durch Aktualisieren der Abgriffgewichtungen, entsprechend dem geänderten Kanalskalierungsfaktor, durch Hinzufügen der Differenz in den Gewichtungen, multipliziert mit einer Kanalimpulsantwortschätzung.

10. System nach Anspruch 7, wobei der akustische Echokompensator konfiguriert ist, das Echo-kompensierte gemischte Audiosignal zu erzeugen, durch Subtrahieren des gefilterten Fern-Audiosignals von dem gemischten Audiosignal.

11. System nach Anspruch 10, wobei der akustische Echokompensator ferner umfasst:
einen Mischschätzer in Kommunikation mit dem Mischer, dem Mischfilter, und dem Echo-kompensierten gemischten Audiosignal, wobei der Mischschätzer konfiguriert ist, um:
eine Ausgangskohärenz des gefilterten Fern-Audiosignals zu messen; und
eine restliche Echoleistung des Echo-kompensierten gemischten Audiosignals zu schätzen; und
einen nicht-linearen Prozessor, der konfiguriert ist, das Echo-kompensierte gemischte Audiosignal zu verarbeiten, um ein Echo-unterdrücktes gemischtes Audiosignal zu erzeugen, wenn die Ausgangskohärenz einen vorbestimmten Schwellenwert überschreitet oder wenn die restliche Echoleistung die Hälfte einer Leistung des gemischten Audiosignals überschreitet.

12. Verfahren, das umfasst:
Empfangen eines Audiosignals von jeder einer Vielzahl von akustischen Quellen;
Empfangen eines Fern-Audiosignals;
Mischen des Audiosignals von jeder der Vielzahl von akustischen Quellen unter Verwenden eines Mischers, um ein gemischtes Audiosignal zu erzeugen; und
Erzeugen eines Echo-kompensierten gemischten Audiosignals, basierend auf dem gemischten Audiosignal, Informationen, die von dem Audiosignal von jeder der Vielzahl von akustischen Quellen gesammelt wurden, und dem Fern-Audiosignal, unter Verwenden eines akustischen Echokompensators.

13. Verfahren nach Anspruch 12:
ferner umfassend Auswählen und Übermitteln von mindestens einem ausgewählten Audiosignal von mindestens einer der Vielzahl von akustischen Quellen, unter Verwenden eines Signalauswahlmechanismus, an den akustischen Echokompensator;
wobei Erzeugen des Echo-kompensierten gemischten Audiosignals Erzeugen des Echo-kompensierten gemischten Audiosignals umfasst, basierend auf dem gemischten Audiosignal, Informationen, die von dem mindestens einen ausgewählten Audiosignal gesammelt wurden, und dem Fern-Audiosignal.

14. Verfahren nach Anspruch 12, wobei Erzeugen des Echo-kompensierten gemischten Audiosignals umfasst:
Messen einer Hintergrundfehlerleistung des Audiosignals von jeder der Vielzahl von akustischen Quellen unter Verwenden eines normalisierte-kleinste-mittlere-Quadrate-Algorithmus in einem Hintergrundfilter, das Hintergrundfilter-Abgriffkoeffizienten aufweist;
Messen einer verborgenen Fehlerleistung des Audiosignals von jeder der Vielzahl von akustischen Quellen, basierend auf dem Audiosignal von jeder der Vielzahl von akustischen Quellen und dem Fern-Audiosignal, unter Verwenden eines verborgenen Filters, das Verborgenes-Filter-Abgriffkoeffizienten aufweist;
Vergleichen der Hintergrundfehlerleistung und der verborgenen Fehlerleistung; und
Auswählen und Speichern der Hintergrundfilter-Abgriffkoeffizienten in einem Speicher, wenn die Hintergrundfehlerleistung größer als die verborgene Fehlerleistung ist.

15. Verfahren nach Anspruch 14, ferner umfassend Kopieren der gespeicherten Hintergrundfilter-Abgriffkoeffizienten aus dem Speicher, um die Verborgenes-Filter-Abgriffkoeffizienten zu ersetzen, wenn die Hintergrundfehlerleistung größer als die verborgene Fehlerleistung ist.

16. Verfahren nach Anspruch 14, wobei:
Messen der Hintergrundfehlerleistung Messen eines Hintergrundfehlers e[n] umfasst, gemäß der Gleichung: $e \left[n\right] = d \left[n\right] - {\hat{h}}^{†} \left[n\right] x \left[n\right]$ wobei d[n] eines der Audiosignale ist, x[n] ein Vektor von Abtastungen von dem Fern-Audiosignal ist, h[n] eine Schätzung der Impulsantwort von einer Abtastung n ist, und ^{†} eine Konjugier-Transponier-Operation bezeichnet; und
Schätzen der Hintergrundfehlerleistung basierend auf dem Hintergrundfehler.

17. Verfahren nach Anspruch 14, ferner umfassend Aktualisieren der Hintergrundfilter-Abgriffkoeffizienten, gemäß der Gleichung: $\hat{h} \left[n+1\right] = \hat{h} \left[n\right] + \frac{α}{{‖ x \left[n\right] ‖}^{2}} {e}^{∗} \left[n\right] x \left[n\right]$ wobei a ein Schrittgrößenparameter ist, * eine Komplex-Konjugations-Operation bezeichnet, und ∥·∥ eine ℓ²-Norm bezeichnet.

18. Verfahren nach Anspruch 12, ferner umfassend Filtern des Fern-Audiosignals, um ein gefiltertes Fern-Audiosignal zu erzeugen, unter Verwenden eines Mischfilters, das Mischfilter-Abgriffkoeffizienten und -Abgriffgewichtungen aufweist.

19. Verfahren nach Anspruch 14, ferner umfassend:
Filtern des Fern-Audiosignals, um ein gefiltertes Fern-Audiosignal zu erzeugen, unter Verwenden eines Mischfilters, das Mischfilter-Abgriffkoeffizienten und -Abgriffgewichtungen aufweist; und
Kopieren der gespeicherten Hintergrundfilter-Abgriffkoeffizienten aus dem Speicher, um die Mischfilter-Abgriffkoeffizienten zu aktualisieren, durch Kombinieren der Verborgenes-Filter-Abgriffkoeffizienten von jeder der Vielzahl von akustischen Quellen, die gerade nicht unter Anpassung sind, und der zuletzt aktualisierten Hintergrundfilter-Abgriffkoeffizienten, entsprechend der akustischen Quelle, die gerade unter Anpassung ist, wenn die Hintergrundfehlerleistung größer als die verborgene Fehlerleistung ist.

20. Verfahren nach Anspruch 14, ferner umfassend:
Filtern des Fern-Audiosignals, um ein gefiltertes Fern-Audiosignal zu erzeugen, unter Verwenden eines Mischfilters, das Mischfilter-Abgriffkoeffizienten und -Abgriffgewichtungen aufweist; und
wenn sich ein Kanalskalierungsfaktor des Mischers geändert hat, Aktualisieren des Mischfilters durch Aktualisieren der Abgriffgewichtungen, entsprechend dem geänderten Kanalskalierungsfaktor, durch Hinzufügen der Differenz in den Gewichtungen, multipliziert mit einer Kanalimpulsantwortschätzung.

21. Verfahren nach Anspruch 18, wobei Erzeugen des Echo-kompensierten gemischten Audiosignals Subtrahieren des gefilterten Fern-Audiosignals von dem gemischten Audiosignal umfasst.

22. Verfahren nach Anspruch 21, ferner umfassend:
Messen einer Ausgangskohärenz des gefilterten Fern-Audiosignals unter Verwenden eines Mischschätzers;
Schätzen einer restlichen Echoleistung des Echo-kompensierten gemischten Audiosignals unter Verwenden des Mischschätzers; und
Verarbeiten des Echo-kompensierten gemischten Audiosignals, um ein Echo-unterdrücktes gemischtes Audiosignal zu erzeugen, unter Verwenden eines nicht-linearen Prozessors, wenn die Ausgangskohärenz einen vorbestimmten Schwellenwert überschreitet oder wenn die restliche Echoleistung die Hälfte einer Leistung des gemischten Audiosignals überschreitet.

## Revendications

1. Système, comprenant :
(A) une mémoire ;
(B) une pluralité de sources acoustiques qui sont chacune configurées de manière à générer un signal audio ;
(C) un mélangeur en communication avec la pluralité de sources acoustiques et la mémoire, le mélangeur étant configuré de manière à mélanger le signal audio provenant de chacune de la pluralité de sources acoustiques afin de produire un signal audio mélangé ; et
(D) un annuleur d'écho acoustique en communication avec le mélangeur, la mémoire et un signal audio distant, l'annuleur d'écho acoustique étant configuré de manière à générer un signal audio mélangé à écho annulé sur la base du signal audio mélangé, d'informations recueillies à partir du signal audio provenant de chacune de la pluralité de sources acoustiques, et du signal audio distant.

2. Système selon la revendication 1, comprenant en outre :
un mécanisme de sélection de signal en communication avec la pluralité de sources acoustiques et l'annuleur d'écho acoustique, le mécanisme de sélection de signal étant configuré de manière à sélectionner au moins un signal audio en provenance d'au moins l'une de la pluralité de sources acoustiques, et à transmettre ledit au moins un signal audio sélectionné à l'annuleur d'écho acoustique ;
dans lequel l'annuleur d'écho acoustique est en outre configuré de manière à générer le signal audio mélangé à écho annulé, sur la base du signal audio mélangé, d'informations recueillies à partir dudit au moins un signal audio sélectionné, et du signal audio distant.

3. Système selon la revendication 1, dans lequel l'annuleur d'écho acoustique comprend :
un filtre de fond présentant des coefficients de prise de filtre de fond, et configuré de manière à mesurer une puissance d'erreur de fond du signal audio provenant de chacune de la pluralité de sources acoustiques, en utilisant un algorithme des moindres carrés normalisé ;
un filtre caché présentant des coefficients de prise de filtre caché, et configuré de manière à mesurer une puissance d'erreur cachée du signal audio provenant de chacune de la pluralité de sources acoustiques, sur la base du signal audio provenant de chacune de la pluralité de sources acoustiques, et du signal audio distant ; et
un module de comparaison d'erreurs en communication avec le filtre de fond et le filtre caché, le module de comparaison d'erreurs étant configuré de manière à :
comparer la puissance d'erreur de fond et la puissance d'erreur cachée ; et
sélectionner et stocker les coefficients de prise de filtre de fond, dans la mémoire, si la puissance d'erreur de fond est supérieure à la puissance d'erreur cachée.

4. Système selon la revendication 3, dans lequel le module de comparaison d'erreurs est en outre configuré de manière à copier les coefficients de prise de filtre de fond stockés à partir de la mémoire, en vue de remplacer les coefficients de prise de filtre caché, si la puissance d'erreur de fond est supérieure à la puissance d'erreur cachée.

5. Système selon la revendication 3, dans lequel le filtre de fond est configuré de manière à mesurer une erreur de fond e[n] selon l'équation ci-dessous : $e \left[n\right] = d \left[n\right] - {\hat{h}}^{†} \left[n\right] x \left[n\right]$ où « d[n] » est l'un des signaux audio, « x[n] » est un vecteur d'échantillons provenant du signal audio distant, « ***ĥ***_{[n]} » est une estimation de la réponse impulsionnelle d'un échantillon « n », et « t » désigne une opération de transposée conjuguée ;
dans lequel la puissance d'erreur de fond est estimée sur la base de l'erreur de fond.

6. Système selon la revendication 3, dans lequel le module de comparaison d'erreurs est en outre configuré de manière à mettre à jour les coefficients de prise de filtre de fond selon l'équation ci-dessous : $\hat{h} \left[n+1\right] = \hat{h} \left[n\right] + \frac{α}{{‖ x \left[n\right] ‖}^{2}} {e}^{∗} \left[n\right] x \left[n\right]$ où « a » est un paramètre d'incrément, « * » désigne une opération de conjugaison complexe, et « ∥·∥ » désigne une norme ℓ².

7. Système selon la revendication 1, dans lequel l'annuleur d'écho acoustique comprend en outre :
un filtre de mélange présentant des coefficients de prise de filtre de mélange et des poids de prise, et configuré de manière à filtrer le signal audio distant en vue de générer un signal audio distant filtré.

8. Système selon la revendication 3, dans lequel :
l'annuleur d'écho acoustique comprend en outre un filtre de mélange présentant des coefficients de prise de filtre de mélange et des poids de prise, et configuré de manière à filtrer le signal audio distant en vue de générer un signal audio distant filtré ; et
le module de comparaison d'erreurs est en outre configuré de manière à copier les coefficients de prise de filtre de fond stockés, à partir de la mémoire, afin de mettre à jour les coefficients de prise de filtre de mélange, en combinant les coefficients de prise de filtre caché de chacune de la pluralité de sources acoustiques non actuellement en cours d'adaptation et les coefficients de prise de filtre de fond mis à jour le plus récemment correspondant à la source acoustique actuellement en cours d'adaptation, si la puissance d'erreur de fond est supérieure à la puissance d'erreur cachée.

9. Système selon la revendication 3, dans lequel :
l'annuleur d'écho acoustique comprend en outre un filtre de mélange présentant des coefficients de prise de filtre de mélange et des poids de prise, et configuré de manière à filtrer le signal audio distant en vue de générer un signal audio distant filtré ; et
le filtre de mélange est en outre configuré de manière à être mis à jour si un facteur d'échelle de canal du mélangeur a été modifié, en mettant à jour les poids de prise correspondant au facteur d'échelle de canal modifié en ajoutant la différence de poids multipliée par une estimation de réponse impulsionnelle de canal.

10. Système selon la revendication 7, dans lequel l'annuleur d'écho acoustique est configuré de manière à générer le signal audio mélangé à écho annulé en soustrayant le signal audio distant filtré du signal audio mélangé.

11. Système selon la revendication 10, dans lequel l'annuleur d'écho acoustique comprend en outre :
un estimateur de mélange en communication avec le mélangeur, le filtre de mélange et le signal audio mélangé à écho annulé, l'estimateur de mélange étant configuré de manière à :
mesurer une cohérence de sortie du signal audio distant filtré ; et
estimer une puissance d'écho résiduelle du signal audio mélangé à écho annulé ; et
un processeur non linéaire configuré de manière à traiter le signal audio mélangé à écho annulé en vue de générer un signal audio mélangé à écho supprimé, si la cohérence de sortie dépasse un seuil prédéterminé, ou si la puissance d'écho résiduelle dépasse la moitié d'une puissance du signal audio mélangé.

12. Procédé comprenant les étapes ci-dessous consistant à :
recevoir un signal audio en provenance de chacune d'une pluralité de sources acoustiques ;
recevoir un signal audio distant ;
mélanger le signal audio provenant de chacune de la pluralité de sources acoustiques, en utilisant un mélangeur, afin de produire un signal audio mélangé ; et
générer un signal audio mélangé à écho annulé sur la base du signal audio mélangé, d'informations recueillies à partir du signal audio provenant de chacune de la pluralité de sources acoustiques, et du signal audio distant, en utilisant un annuleur d'écho acoustique.

13. Procédé selon la revendication 12, comprenant en outre l'étape ci-dessous consistant à :
sélectionner et transmettre au moins un signal audio sélectionné provenant d'au moins l'une de la pluralité de sources acoustiques, en utilisant un mécanisme de sélection de signal, à l'annuleur d'écho acoustique ;
dans lequel l'étape de génération du signal audio mélangé à écho annulé consiste à générer le signal audio mélangé à écho annulé sur la base du signal audio mélangé, d'informations recueillies à partir dudit au moins un signal audio sélectionné, et du signal audio distant.

14. Procédé selon la revendication 12, dans lequel l'étape de génération du signal audio mélangé à écho annulé comprend les étapes ci-dessous consistant à :
mesurer une puissance d'erreur de fond du signal audio provenant de chacune de la pluralité de sources acoustiques, en utilisant un algorithme des moindres carrés normalisé, dans un filtre de fond présentant des coefficients de prise de filtre de fond ;
mesurer une puissance d'erreur cachée du signal audio provenant de chacune de la pluralité de sources acoustiques, sur la base du signal audio provenant de chacune de la pluralité de sources acoustiques, et du signal audio distant, en utilisant un filtre caché présentant des coefficients de prise de filtre caché ; et
comparer la puissance d'erreur de fond et la puissance d'erreur cachée ; et
sélectionner et stocker les coefficients de prise de filtre de fond, dans une mémoire, si la puissance d'erreur de fond est supérieure à la puissance d'erreur cachée.

15. Procédé selon la revendication 14, comprenant en outre l'étape consistant à copier les coefficients de prise de filtre de fond stockés, à partir de la mémoire, en vue de remplacer les coefficients de prise de filtre caché, si la puissance d'erreur de fond est supérieure à la puissance d'erreur cachée.

16. Procédé selon la revendication 14, dans lequel :
l'étape de mesure de la puissance d'erreur de fond consiste à mesurer une erreur de fond e[n] selon l'équation ci-dessous : $e \left[n\right] = d \left[n\right] - {\hat{h}}^{†} \left[n\right] x \left[n\right]$ où « d[n] » est l'un des signaux audio, « x[n] » est un vecteur d'échantillons provenant du signal audio distant, « ***ĥ***[n] » est une estimation de la réponse impulsionnelle d'un échantillon « n », et « t » désigne une opération de transposée conjuguée ; et
le procédé comprend l'étape consistant à estimer la puissance d'erreur de fond sur la base de l'erreur de fond.

17. Procédé selon la revendication 14, comprenant en outre l'étape consistant à mettre à jour les coefficients de prise de filtre de fond selon l'équation ci-dessous : $\hat{h} \left[n+1\right] = \hat{h} \left[n\right] + \frac{α}{{‖ x \left[n\right] ‖}^{2}} {e}^{∗} \left[n\right] x \left[n\right]$ où « a » est un paramètre d'incrément, « * » désigne une opération de conjugaison complexe, et « ∥·∥ » désigne une norme ℓ².

18. Procédé selon la revendication 12, comprenant en outre l'étape consistant à filtrer le signal audio distant en vue de générer un signal audio distant filtré en utilisant un filtre de mélange présentant des coefficients de prise de filtre de mélange et des poids de prise.

19. Procédé selon la revendication 14, comprenant en outre les étapes ci-dessous consistant à :
filtrer le signal audio distant en vue de générer un signal audio distant filtré en utilisant un filtre de mélange présentant des coefficients de prise de filtre de mélange et des poids de prise ; et
copier les coefficients de prise de filtre de fond stockés, à partir de la mémoire, en vue de mettre à jour les coefficients de prise de filtre de mélange, en combinant les coefficients de prise de filtre caché de chacune de la pluralité de sources acoustiques non actuellement en cours d'adaptation, et les coefficients de prise de filtre de fond mis à jour le plus récemment correspondant à la source acoustique actuellement en cours d'adaptation, si la puissance d'erreur de fond est supérieure à la puissance d'erreur cachée.

20. Procédé selon la revendication 14, comprenant en outre les étapes ci-dessous consistant à :
filtrer le signal audio distant en vue de générer un signal audio distant filtré, en utilisant un filtre de mélange présentant des coefficients de prise de filtre de mélange et des poids de prise ; et
si un facteur d'échelle de canal du mélangeur a été modifié, mettre à jour le filtre de mélange, en mettant à jour les poids de prise correspondant au facteur d'échelle de canal modifié, en ajoutant la différence de poids multipliée par une estimation de réponse impulsionnelle de canal.

21. Procédé selon la revendication 18, dans lequel l'étape de génération du signal audio mélangé à écho annulé comprend l'étape consistant à soustraire le signal audio distant filtré du signal audio mélangé.

22. Procédé selon la revendication 21, comprenant en outre les étapes ci-dessous consistant à :
mesurer une cohérence de sortie du signal audio distant filtré en utilisant un estimateur de mélange ;
estimer une puissance d'écho résiduelle du signal audio mélangé à écho annulé, en utilisant l'estimateur de mélange ; et
traiter le signal audio mélangé à écho annulé en vue de générer un signal audio mélangé à écho supprimé, en utilisant un processeur non linéaire, si la cohérence de sortie dépasse un seuil prédéterminé, ou si la puissance d'écho résiduelle dépasse la moitié d'une puissance du signal audio mélangé.
